# EUROPÄISCHE PATENTSCHRIFT

(11) **EP 2 031 003 B1**
(45) Veröffentlichungstag und Bekanntmachung des Hinweises auf die Patenterteilung: **21.12.2011**
(21) Anmeldenummer: 08014570.9
(22) Anmeldetag: 16.08.2008
(51) Int. Cl.: C08G 18/67, C08G 18/78, C09D 175/16

(54) **Verfahren zur Herstellung von niedrigviskosen Allophanaten mit aktinisch härtbaren Gruppen**
Method for producing low viscosity allophanates with actinically hardenable groups
Procédé de fabrication d'allophanates peu visqueuses à l'aide de groupes pouvant être durcis de manière actinique

(30) Priorität: 25.08.2007 DE 102007040239
(43) Veröffentlichungstag der Anmeldung: 04.03.2009
(73) Patentinhaber: Bayer MaterialScience AG, 51368 Leverkusen (DE)
(72) Erfinder: Ludewig, Michael, Dr., 51373 Leverkusen (DE); Fischer, Wolfgang, Dr., 40668 Meerbusch (DE); Kuczewski, Helmut, 47475 Kamp.Lintfort (DE)

(56) Entgegenhaltungen:
- EP-A- 0 959 115
- EP-A- 1 645 582

## Beschreibung

Die vorliegende Erfindung betrifft ein Verfahren zur Herstellung von niedrigviskosen Umsetzungsprodukten von Polyisocyanaten, die aktivierte, unter Einwirkung aktinischer Strahlung unter Polymerisation reagierende, ethylenisch ungesättigte Gruppen enthalten.

Die Härtung von aktivierten Doppelbindungen tragenden Beschichtungssystemen durch aktinische Strahlung, wie z. B. UV-Licht, IR-Strahlung oder auch Elektronenstrahlung ist bekannt und technisch etabliert. Es ist eine der schnellsten Härtungsmethoden in der Beschichtungstechnologie. Auf diesem Prinzip basierende Beschichtungsmittel werden daher als strahlen- oder aktinisch-härtende bzw. härtbare Systeme bezeichnet.

Bedingt durch die ökologischen und ökonomischen Anforderungen an moderne Lacksysteme möglichst wenig oder gar kein organisches Lösungsmittel zur Viskositätseinstellung zu verwenden, besteht der Wunsch, bereits niedrigviskose Lackrohstoffe zu verwenden. Bekannt hierfür sind seit langem Polyisocyanate mit Allophanatstruktur wie sie u. a. in EP-A 0 682 012 beschrieben werden.

In der Technik werden diese durch Umsetzung eines ein- oder mehrwertigen Alkohols mit großen Mengen an überschüssigem aliphatischen und/oder cycloaliphatischen Diisocyanat hergestellt (vgl. GB-A 994 890, EP-A 0 000 194 oder EP-A 0 712 840). Anschließend erfolgt die Entfernung nicht reagierten Diisocyanats mittels Abdestillation im Vakuum. Nach DE-A 198 60 041 kann diese Verfahrensweise auch mit OH-funktionellen Verbindungen mit aktivierten Doppelbindungen, wie z.B. Hydroxyalkyläcrylaten, durchgeführt werden, wobei jedoch zur Herstellung besonders monomerenarmer Produkte Schwierigkeiten auftreten. Da der Destillationsschritt bei Temperaturen bis zu 135°C verlaufen muss, um den Rest-Isocyanatgehalt ausreichend senken zu können (< 0,5 Gew.-% Restmonomer), können während der Aufreinigung bereits Doppelbindungen thermisch initiiert unter Polymerisation reagieren, so dass keine einwandfreien Produkte mehr erhalten werden.

Die Herstellung monomerenarmer, allophanathaltiger, strahlenhärtender Bindemittel auf Polyurethanbasis wird in EP-A 0 867 457 und US-A 5 739 251 beschrieben. Diese Bindemittel tragen allerdings keine aktivierten Doppelbindungen, sondern unreaktive Allylethergruppen (Struktur R-O-CH₂-CH=CH₂). Daher benötigt man den Zusatz von Reaktivverdünntern (niedermolekulare Ester der Acrylsäure), die die notwendige UV-Reaktivität einbringen.

Ebenso hat es nicht an Versuchen gemangelt, Allophanate indirekt, aus anderen Isocyanatderivaten, als Urethanen und Isocyanaten herzustellen. So beschreibt die EP-A 0 825 211 ein Verfahren zum Aufbau von Allophanatstrukturen aus Oxadiazintrionen, wobei hier allerdings keine strahlenhärtenden Derivate mit aktivierten Doppelbindungen erwähnt werden. Die Übertragung auf die besonderen Gegebenheiten von strahlenhärtenden Systemen wird in der WO 2004/033522 beschrieben.

Ein weiterer Weg ist die Öffnung von Uretdionen (vgl. Proceedings of the International Waterborne, High-Solids, and Powder Coatings Symposium 2001, 28^{th}, 405-419 sowie US-A 2003 0153713) zu Allophanat-Strukturen, der ebenfalls schon erfolgreich auf strahlenhärtende Systeme übertragen werden konnte (WO 2005/092942).

Beide Wege benötigen veredelte Rohstoffe als Ausgangsmaterial und führen nur zu einem an Nebenprodukten reichen Allophanatprodukt.

US 5 777 024 beschreibt die Herstellung von niedrigviskosen strahlenhärtenden Allophanaten durch eine Reaktion von hydroxyfunktionellen Monomeren, die aktivierte Doppelbindungen tragen, mit Isocyanatgruppen von allophanatmodifizierten Isocyanurat-Polyisocyanaten. Die über die Allophanatgruppen gebundenen Reste sind dabei gesättigt, wodurch auf eine mögliche höhere Funktionalität verzichtet wird.

Aus EP-B 694 531 wird ein mehrstufiges Verfahren zur Herstellung hydrophilierter Allophanate mit strahlenhärtenden Gruppen beschrieben. Dabei wird jedoch zunächst ein NCO- und acrylatfunktionelles Urethan hergestellt, welches hydrophiliert wird und anschließend nach Zugabe eines weiteren NCO- und acrylatfunktionellen Urethans allophanatisiert wird. Als Verfahrenstemperatur zur Allophanatisierung werden Temperaturen von 100 - 110°C angegeben.

Schließlich wurde in der EP-A 1 645 582 ein Verfahren vorgestellt, das von einfachen Diisocyanaten ausgehend durch Umsetzung mit Hydroxy-funktionellen Acrylaten ohne Destillation der Produkte zu niedrigviskosen Allophanaten führt. Nachteil dieses Verfahrens ist allerdings, dass eine befriedigende Umsetzungsgeschwindigkeit nur mit schwer zugänglichen Ammonium-Salzen zu erreichen ist. Auch sind die Viskositäten der beschriebenen Produkte nicht so niedrig, wie z.B. die Viskositäten der Allophanate, die durch das in der EP-A 0 825 211 beschriebene Verfahren erhältlich sind.

Niedrigere Viskositäten können bei in der EP 1 645 582 beschriebenen Methode erreicht werden, indem eine geeignete, basische Zink-Katalyse angewandt wird. Dennoch bleibt die Viskosität verbesserungswürdig.

Es war daher die Aufgabe der vorliegenden Erfindung, ein Verfahren zur Verfügung zu stellen, mit dem niedrigviskosere - als in EP-A 1 645 582⁆ beschrieben - durch aktinische Strahlung vernetzbare, strahlenhärtende Allophanate bereit gestellt werden.

Ausgehend von der EP-A 1 645 582 wurde nun gefunden, dass sich eine weitere Reduzierung der Viskosität bei solchen strahlenhärtenden Allophanate erzielen lässt, wenn man eine bestimmte Mischung an Hydroxyalkylacrylaten zur Synthese solcher Allophanate verwendet. In EP-A 1 645 582⁆ wird zwar grundsätzlich auch der Einsatz dieser Hydroxyalkylacrylate beschrieben, der besondere viskositätserniedrigende Effekt bestimmter Mischungen auf die Viskosität wurde aber nicht beschrieben, obwohl sich die Anmeldung ebenfalls mit dem Problem der niedrigviskosen Allophanate beschäftigt.

Gegenstand der Erfindung ist daher ein Verfahren zur Herstellung von strahlenhärtenden Allophanaten mit Restmonomergehalten von weniger als 0,5 Gew.-% und einem NCO-Gehalt von weniger als 1 Gew.-%, bei dem aus
A) isocyanatgruppenhaltigen Verbindungen,
B) einer Mischung, die zu mindestens 90 mol-% Hydroxyethylacrylat und Hydroxypropylacrylat enthält, bei der 20-40 mol-% Hydroxyethylacrylat enthalten ist,
C) gegebenenfalls weiteren, nicht strahlenhärtenden Verbindungen mit NCO-reaktiven Gruppen,
D) gegebenenfalls in Anwesenheit eines Katalysators
NCO-gruppenhaltige Urethane mit strahlenhärtenden Gruppen gebildet werden, die anschließend oder gleichzeitig ohne weitere Zugabe an isocyanatgruppenhaltigen Verbindungen in Anwesenheit
E) eines Allophanatisierungskatalysators und
F) gegebenenfalls eines tertiären Amins
umgesetzt werden,
wobei das Verhältnis von NCO-Gruppen der Verbindungen aus A) zu den OH-Gruppen von den Verbindungen aus B) und ggf. C) 1,35 : 1,0 bis 1,3 : 1,0 beträgt.

Vorteilhaft ist das erfindungsgemäße Verfahren, wenn in Komponente B) eine Mischung eingesetzt wird, die zu 100 mol-% aus einer Mischung von Hydroxyethylacrylat und Hydroxypropylacrylat besteht.

Vorteilhaft ist das erfindungsgemäße Verfahren, wenn in Komponente A) Hexamethylendiisocyanat (HDI), Isophorondiisocyanat (IPDI) und/oder 4,4'-Diisocyanatodicyclohexylmethan enthalten sind.

Vorteilhaft ist das erfindungsgemäße Verfahren, wenn die Allophanatisierung solange geführt wird, bis das Endprodukt einen NCO-Gehalt von unter 0,2 Gew.-% aufweist.

Ein weiterer Gegenstand der Erfindung sind strahlenhärtende Allophanate erhältlich nach dem erfindungsgemäßen Verfahren.

Ein weiterer Gegenstand der Erfindung ist die Verwendung der strahlenhärtenden Allophanate, erhältlich nach dem erfindungsgemäßen Verfahren, für die Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen.

Ein weiterer Gegenstand der Erfindung ist ein Beschichtungsmittel enthaltend
a) ein oder mehrere der strahlenhärtenden Allophanate, erhältlich nach dem erfindungsgemäßen Verfahren,
b) gegebenenfalls ein oder mehrere Polyisocyanate mit freien oder blockierten Isocyanatgruppen, die frei sind von unter Einwirkung aktinischer Strahlung mit ethylenisch ungesättigten Verbindungen unter Polymerisation reagierenden Gruppen,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls freie oder blockierte NCO-Gruppen aufweisen,
d) gegebenenfalls ein oder mehrere mit Isocyanaten reagierende, aktiven Wasserstoff enthaltende Verbindungen
e) Initiatoren,
f) gegebenenfalls Lösemittel und
g) gegebenenfalls Hilfs- und Zusatzstoffe.

Ein weiterer Gegenstand der Erfindung sind Substrate beschichtet mit Beschichtungen, die mit Hilfe eines strahlungshärtendem Allophanat, erhältlich nach dem erfindungsgemäßen Verfahren, erhalten wurden.

Als isocyanathaltige Verbindungen A) kommen aromatische, aliphatische und cycloaliphatische Polyisocyanate in Betracht. Geeignete Polyisocyanate sind Verbindungen der Formel Q(NCO)ₙ mit einem mittleren Molekulargewicht unter 800, worin n eine Zahl von 2 bis 4 und Q einen aromatischen C₆-C₁₅-Kohlenwasserstoffrest, einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 2,4-/2,6-Toluoldiisocyanat (TDI), Methylendiphenyldiisocyanat (MDI), Triisocyanatononan (TIN), Naphtyldiisocyanat (NDI), 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methylpentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethyl-m- oder -p-xylylen-diisocyanat (TMXDI) sowie aus diesen Verbindungen bestehende Gemische.

Ebenfalls geeignet als isocyanathaltige Verbindungen A) sind Umsetzungsprodukte der vorgenannten Isocyanate mit sich selbst oder untereinander z.B. zu Uretdionen (wie z.B. Desmodur^{®} N3400, Bayer MaterialScience, Leverkusen, DE) oder Isocyanuraten (wie z.B. Desmodur^{®} N3300 (höher Viskoser Typ) oder Desmodur^{®} N3600 (niedrigviskoserer Typ), beide Bayer MaterialScience, Leverkusen, DE)

Weiterhin geeignet als isocyanathaltige Verbindungen A) sind Umsetzungsprodukte der vorgenannten Isocyanate mit anderen isocyanatreaktiven Verbindungen zu Prepolymeren. Solche isocyanatreaktiven Verbindungen sind vor allem Polyole, wie z.B. Polyetherpolyole, Polyesterpolyole, Polycarbonatpolyole und mehrwertige Alkohole. Als Polyole können höhermolekulare und in untergeordneter Menge auch niedermolekulare Hydroxylverbindungen eingesetzt werden.

Die Verbindungen der Komponente A) können dementsprechend direkt in das erfindungsgemäße Verfahren eingesetzt werden oder, ausgehend von einer beliebigen Vorstufe durch Vorreaktion hergestellt werden, bevor das erfindungsgemäße Verfahren durchgeführt wird.

Bevorzugt als Komponente A) ist die Verwendung von monomeren Diisocyanaten. Besonders bevorzugt ist die Verwendung von Hexamethylendiisocyanat (HDI), Isophorondiisocyanat (IPDI) und/oder 4,4'-Diisocyanatodicyclohexylmethan und ganz besonders bevorzugt diejenige von Hexamethylendiisocyanat (HDI).

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999).

Unter Einwirkung aktinischer Strahlung mit ethylenisch ungesättigten Verbindungen unter Polymerisation reagierende Gruppen (strahlenhärtende Gruppen) werden im Rahmen der vorliegenden Erfmdung Vinylether-, Maleinyl-, Fumaryl-, Maleinimid-, Dicyclopentadienyl- , Acrylamid-, Acryl- und Methacryl-Gruppen verstanden, wobei dies bevorzugt Vinylether-, Acrylat- und/oder Methacrylat-Gruppen, besonders bevorzugt Acrylatgruppen sind.

Für das erfindungsgemäße Verfahren werden als Komponente B) eine Mischung aus 2-Hydroxyethylacrylat und 2-Hydroxypropylacrylat eingesetzt. Es ist dabei erfindungswesentlich, dass diese Mischung zu 20-40 mol-% aus 2-Hydroxyethylacrylat und dem entsprechenden zu 90 bis 100 mol-% fehlendem Anteil aus 2-Hydroxypropylacrylat besteht.

Es können auch noch bis zu 10 mol-% andere ethylenisch ungesättigte hydroxylgruppenhaltige Verbindungen enthalten sein, wie z.B 2-Hydroxyethylmethacrylat, Polyethylenoxid-mono(meth)acrylat (z.B. PEA6 / PEM6; Laporte Performance Chemicals Ltd., UK), Polypropylenoxidmono(meth)acrylat (z.B. PPA6, PPM5S; Laporte Performance Chemicals Ltd., UK), Polyalkylenoxidmono(meth)acrylat (z.B. PEM63P, Laporte Performance Chemicals Ltd. , UK), Poly(ε-caprolacton)mono(meth)acrylate wie z.B. Tone M100^{®} (Dow,

Schwalbach, DE), 2-Hydroxypropylmethacrylat, 4-Hydroxybutyl(meth)acrylat, Hydroxybutylvinylether, 3-Hydroxy-2,2-dimethylpropyl(meth)acrylat, die hydroxyfunktionellen Mono-, Di- oder soweit möglich höheren Acrylate wie z.B. Glycerindi(meth)acrylat, Trime-thylolpropandi(meth)acrylat, Pentaerythrittri(meth)acrylat oder Dipentaerythritpenta-(meth)acrylat, die durch Umsetzung mehrwertiger gegebenenfalls alkoxylierter Alkohole wie Trimethylolpropan, Glycerin, Pentaerythrit, Dipentaerythrit zugänglich sind.

Ebenfalls geeignet als Bestandteil (bis zu 10 mol-%) von B) sind auch Alkohole, die sich aus der Umsetzung von doppelbindungshaltigen Säuren mit gegebenenfalls doppelbindungshaltigen Epoxidverbindungen erhalten werden, so z.B. die Umsetzungsprodukte von (Meth)acrylsäure mit Glycidyl(meth)acrylat oder Bisphenol-A-diglycidylether.

Darüber hinaus können ebenfalls ungesättigte Alkohole eingesetzt werden, die aus der Umsetzung von gegebenenfalls ungesättigten Säureanhydriden mit gegebenenfalls acrylatgruppenhaltigen Hydroxy- und Epoxidverbindungen erhalten werden. Beispielsweise sind dies die Umsetzungsprodukte von Maleinsäureanhydrid mit 2-Hydroxyethyl(meth)acrylat und Glycidyl(meth)acrylat.

Es ist allerdings bevorzugt, neben 2-Hydroxyethylacrylat und 2-Hydroxypropylacrylat keine weiteren strahlenhärtenden Gruppen einzusetzen.

Neben den OH-funktionellen ungesättigten Verbindungen der Komponente B) können im erfindungsgemäßen Verfahren auch unter Einwirkung von aktinischen Strahlen nichtreaktive Verbindungen C) eingesetzt werden, die NCO-reaktive Gruppen wie beispielsweise OH, SH oder NH aufweisen.

Es können beispielsweise Polyetherpolyole, Polyesterpolyole, Polycarbonatpolyole und mehrwertige Alkohole können zur Beeinflussung der Produkteigenschaften als Komponente C) mitverwendet werden. Als Polyole können höhermolekulare und in untergeordneter Menge auch niedermolekulare Hydroxylverbindungen eingesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000 g/mol, bevorzugt solche mit mittleren Molekulargewichten von 500 bis 6 500 g/mol. Bevorzugte höhermolekulare Hydroxylverbindungen sind Hydroxypolyether, Hydroxypolyester und Hydroxypolycarbonate.

Als niedermolekulare Polyhydroxylverbindungen können in der Polyurethan-Chemie übliche Polyole, mit Molekulargewichten von 62 bis 399, wie Ethylenglykol, Triethylenglykol, Tetraethylenglykol, Propandiol-1,2 und -1,3, Butandiol-1,4 und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6, Butantriol-1,2,4, Pentaerythrit, Chinit, Mannit, Sorbit, Methylglykosid und 4,3,6-Dianhydrohexite verwendet werden.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids. Bevorzugt sind im Durchschnitt 2 bis 4 Hydroxylgruppen aufweisende Propylenoxidpolyether, die bis zu 50 Gew.-% eingebaute Polyethylenoxid-Einheiten enthalten können.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispielhaft sind genannt Adipinsäure, Phthalsäure, Isophthalsäure, Bemsteinsärue, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester. Bevorzugt sind unterhalb 60°C schmelzende Hydroxypolyester mit 2 oder 3 endständigen OH-Gruppen.

Die in Frage kommenden Polycarbonatpolyole sind durch Reaktion von Kohlensäurederivaten, z.B. Diphenylcarbonat, Dimethylcarbonat oder Phosgen, mit Diolen erhältlich. Als derartige Diole kommen z.B. Ethylenglykol, Triethylenglykol, Tetraethylenglykol, Propandiol-1,2 und - 1,3, Butandiol-1,4 und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Bevorzugt erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-A 1 770 245, oder durch Veretherung von Hexandiol mit sich selbst zum Di- oder Trihexylenglykol erhalten wurden. Die Herstellung solcher Derivate ist z.B. aus der DE-A 1 570 540 bekannt. Auch die in der DE-A 3 717 060 beschriebenen Polyether-Polycarbonatdiole können sehr gut eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Weiterhin können hydrophilierend wirkende Gruppen eingebaut werden, insbesondere wenn eine Verwendung aus wässrigem Medium, z.B. in einem wässrigen Lack, vorgesehen ist. Hydrophilierend wirkende Gruppen sind ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen eingebaut werden können. Bevorzugt geeignete isocyanatreaktive Gruppen sind Hydroxyl- und Amingruppen.

Geeignete ionische oder potentiell ionische Gruppen enthaltende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind z.B. Polyoxyalkylenether, die mindestens eine Hydroxy- oder Aminogruppe enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (I), 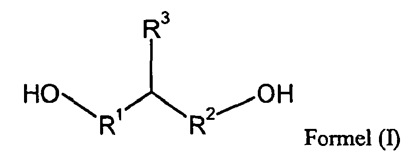 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Insbesondere bei der Verwendung eines ionische Gruppen enthaltenden Hydrophilierungsmittel muss sein Einfluss auf die Wirkung der Katalysatoren D) und vor allem E) überprüft werden. Aus diesem Grund sind nichtionische Hydrophilierungsmittel bevorzugt.

Als Verbindungen der Katalysatorkomponente D) kommen dem Fachmann an sich bekannte Urethanisierungskatalysatoren wie Organozinnverbindungen, Zinkverbindungen oder aminische Katalysatoren in Frage. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden. Als Zinkverbindung kann z.B. Zinkacetylacetonat oder Zinkoctoat eingesetzt werden.

Bevorzugt werden in D) Dibutylzinndilaurat oder Zinkoctoat als Urethanisierungskatalysator eingesetzt.

Im erfindungsgemäßen Verfahren wird die Katalysatorkomponente D) sofern überhaupt mitverwendet in Mengen von 0,001 - 5,0 Gew.-%, bevorzugt 0,001 - 0,1 Gew.-% bezogen auf Festgehalt des Verfahrensprodukts eingesetzt.

Als Katalysator E) können dem Fachmann an sich bekannte Allophanatisierungskatalysatoren, wie die Zinksalze Zinkoctoat, Zinkacetylacetonat und Zink-2-ethylcaproat, oder Tetraalkylammoniumverbindungen, wie *N,N,N-*Trimethyl-*N-*2-hydroxypropylammoniumhydroxid, *N,N,N-*Trimethyl-*N*-2-hydroxypropylammonium-2-ethylhexanoat oder Cholin-2-ethylhexanoat verwendet werden. Bevorzugt ist die Verwendung von Zinkoctoat.

Dabei werden unter dem Begriff ,Zinkoctoat' im Rahmen dieser Erfindung auch technische Isomeren-Produktgemische verstanden, die neben verschiedenen isomeren Octoaten auch Anteile an Zink-Salzen von C₆-C₁₉-Fettsäuren enthalten können. Beispiele für bevorzugte, verwendbare Produkte sind Borchi Kat 22 der Firma Borchers GmbH, Langenfeld, DE oder Tegokat^{®} 620 der Firma Goldschmidt GmbH, Essen, DE.

Der Allophanatisierungskatalysator wird in Mengen von 0,001 - 5,0 Gew.-%, bevorzugt 0,001 - 1,0 Gew.-% und besonders bevorzugt 0,05 - 0,5 Gew.-% bezogen auf Festgehalt des Verfahrensprodukts eingesetzt.

Grundsätzlich kann schon für die Urethanisierungsreaktion in D) der Allophanatisierungskatalysator E) verwendet werden und die zweistufige Verfahrensweise zu einer einstufigen Umsetzung vereinfacht werden.

Der Katalysator E) kann in einer Portion auf einmal oder aber auch portionsweise oder auch kontinuierlich zugegeben werden. Bevorzugt ist eine Zugabe auf einmal.

Bei der Verwendung des bevorzugten Zinkoctoates als Allophanatisierungskatalysator kann die Allophanatisierungsreaktion sehr langsam und oft unvollständig verlaufen, so dass es in diesem Fall bevorzugt ist, als Komponente F) ein tertiäres Amin einzusetzen. Geeignete tertiäre Amine besitzen vorzugsweise mindestens neun Kohlenstoffatome, wobei sowohl aromatische, wie auch aliphatische Reste enthalten sein können, die auch untereinander verbrückt sein können. Bevorzugt enthalten die Amine keine weiteren funktionellen Gruppen. Beispiele für geeignete Verbindungen sind *N,N,N-*Benzyldimethylamin, *N,N,N-*Dibenzylmethylamin, *N,N,N*-Cyclohexyldimethylamin, *N*-Methylmorpholin, *N,N,N-*Tribenzylamin, *N,N,N-*Tripropylamin, *N,N,N-*Tributylamin, *N,N,N-*Tripentylamin oder *N,N,N-*Trihexylamin. Bevorzugt ist dabei die Verwendung von *N,N,N-*Benzyldimethylamin.

Das tertiäre Amin, falls mitverwendet, wird in Mengen von 0,01 - 5,0 Gew.-%, bevorzugt 0,01 - 1,0 Gew.-% und besonders bevorzugt 0,05 - 0,5 Gew.-% bezogen auf Festgehalt des Verfahrensprodukts eingesetzt.

Bevorzugt wird die Reaktion der Allophanatisierung solange geführt, bis der NCO-Gehalt des Produktes unter 0,5 Gew.%, besonders bevorzugt unter 0,2 Gew.-% liegt.

Es ist grundsätzlich möglich, einen Restgehalt an NCO-Gruppen mit NCO-reaktiven Verbindungen wie z.B. Alkoholen nach beendeter Allophanatisierungsreaktion umzusetzen. Dadurch werden Produkte mit ganz besonders niedrigen NCO-Gehalten erhalten.

Es ist auch möglich die Katalysatoren D) und/oder E) nach dem Fachmann bekannten Methoden auf Trägermaterialien zu bringen und als heterogene Katalysatoren zu verwenden.

Im erfindungsgemäßen Verfahren können optional an beliebiger Stelle Lösemittel oder Reaktivverdünner eingesetzt werden. Dies ist aber nicht bevorzugt.

Geeignete Lösemittel sind gegenüber den vorhandenen funktionellen Gruppen des Verfahrensprodukts vom Zeitpunkt der Zugabe bis zum Ende des Verfahrens inert. Geeignet sind z.B. in der Lacktechnik verwendete Lösemittel wie Kohlenwasserstoffe, Ketone und Ester, z.B. Toluol, Xylol, Isooctan, Aceton, Butanon, Methylisobutylketon, Ethylacetat, Butylacetat, Tetrahydrofuran, N-Methylpyrrolidon, Dimethylacetamid, Dimethylformamid, wobei jedoch bevorzugt kein Lösungsmittel zugesetzt wird.

Als Reaktivverdünner können Verbindungen mitverwendet werden, die bei der UV-Härtung ebenfalls (co)polymerisieren und somit in das Polymernetzwerk mit einbauen und gegenüber NCO-Gruppen inert sind. Solche Reaktivverdünner sind in P. K. T. Oldring (Ed.), Chemistry & Technology of UV & EB Formulations For Coatings, Inks & Paints, Vol. 2, 1991, SITA Technology, London, S. 237 - 285 exemplarisch beschrieben. Dies können Ester der Acrylsäure oder Methacrylsäure, bevorzugt der Acrylsäure mit mono- oder mehrfachfunktionellen Alkoholen sein. Als Alkohole eignen sich beispielsweise die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatischer Alkohole wie Phenoxyethanol und Nonylphenylethanol, sowie Tetrahydrofurfurylalkohole. Weiterhin können alkoxylierte Derivate dieser Alkohole verwendet werden. Geeignete zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Geeignete dreiwertige Alkohole sind Glycerin oder Trimethylolpropan oder deren alkoxylierte Derivate. Vierwertige Alkohole sind Pentaerythrit oder dessen alkoxylierte Derivate.

Die erfindungsgemäßen Bindemittel müssen gegen vorzeitige Polymerisation stabilisiert werden. Daher gibt man als Bestandteil von Komponente A) oder B) vor und/oder während der Reaktion Stabilisatoren zu, die die Polymerisation inhibieren. Bevorzugt ist dabei die Verwendung von Phenothiazin. Mögliche andere Stabilisatoren sind Phenole wie para-Methoxyphenol, 2,5-Di-tert.-Butylhydrochinon oder 2,6-Di-tert.-butyl-4-methylphenol. Geeignet sind auch N-Oxyl-Verbindungen zur Stabilisierung wie z.B. 2,2,6,6-Tetramethylpiperidin-N-Oxid (TEMPO) oder seine Derivate. Ebenso können die Stabilisatoren auch chemisch mit in das Bindemittel eingebaut werden, dabei eignen sich Verbindungen der oben genannten Klassen insbesondere wenn sie noch weitere freie aliphatische Alkoholgruppen oder primäre oder sekundäre Amingruppen tragen und damit über Urethanoder Harnstoff-Gruppen chemisch an Verbindungen der Komponente A) gebunden werden können. Hierfür besonders geeignet sind 2,2,6,6-Tetramethyl-4-hydroxy-piperidin-N-Oxid.

Andere Stabilisatoren wie z. B. Verbindungen der Klasse der HALS (HALS = hindered amine light stabilizers) werden dagegen weniger bevorzugt in E) eingesetzt, da sie bekanntermaßen keine so effektive Stabilisierung zu ermöglichen und vielmehr zu einer "schleichenden" radikalischen Polymerisation ungesättigter Gruppen führen können.

Die Stabilisatoren sind so zu wählen, dass sie unter dem Einfluss der Katalysatoren D) und E) stabil sind und unter den Reaktionsbedingungen nicht mit einer Komponente des erfmdungsgemäßen Verfahrens reagieren. Dies kann zum Verlust der Stabilisierungseigenschaft führen.

Zur Stabilisierung der Reaktionsmischung, insbesondere der ungesättigten Gruppen gegen vorzeitige Polymerisation, kann ein sauerstoffhaltiges Gas, bevorzugt Luft, in und/oder über das Reaktionsgemisch geleitet werden. Es ist bevorzugt, dass das Gas einen möglichst geringen Anteil an Feuchtigkeit besitzt, um unerwünschte Reaktion bei Vorhandensein von Isocyanat zu verhindern.

In der Regel wird während der Herstellung der erfindungsgemäßen Bindemittel ein Stabilisator zugesetzt und abschließend um eine Langzeitstabilität zu erreichen nochmals mit einem phenolischen Stabilisator nachstabilisiert und ggf. mit Luft das Reaktionsprodukt gesättigt.

Im erfindungsgemäßen Verfahren wird die Stabilisatorkomponente typischerweise in Mengen von 0,001 - 5,0 Gew.-%, bevorzugt 0,01 - 2,0 Gew.-% und besonders bevorzugt 0,05 - 1,0 Gew.-% bezogen auf Festgehalt des Verfahrensprodukts eingesetzt.

Das erfindungsgemäße Verfahren wird bei Temperaturen von höchstens 100°C, bevorzugt 20 bis 100°C, besonders bevorzugt von 40 bis 100°C, insbesondere bei 60 bis 90 °C durchgeführt.

Es ist unerheblich, ob eine oder beide Stufen des erfmdungsgemäßen Verfahrens kontinuierlich z.B. in einem Statik-Mischer, Extruder oder Kneter oder diskontinuierlich z.B. in einem Rührreaktor durchgeführt wird.

Bevorzugt wird das erfindungsgemäße Verfahren in einem Rührreaktor durchgeführt.

Der Verlauf der Reaktion kann durch geeignete im Reaktionsgefäß installierte Meßgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehaltes, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Bevorzugt ist die IR-Kontrolle auf vorhandene freie NCO Gruppen (für aliphatische NCO-Gruppen, Bande bei ca.ν = 2272 cm⁻¹) und GC-Untersuchungen auf nicht umgesetzte Verbindungen aus A), B) und ggf. C).

Die nach dem erfindungsgemäßen Verfahren erhältlichen ungesättigten Allophanate, insbesondere die auf Basis des bevorzugt eingesetzten HDI, weisen bevorzugt Scherviskositäten bei 23°C von ≤ 100 000 mPas, besonders bevorzugt ≤ 70 000 mPas auf.

Die nach dem erfindungsgemäßen Verfahren erhältlichen ungesättigten Allophanate, insbesondere die auf Basis des bevorzugt eingesetzten HDI, weisen bevorzugt zahlenmittlere Molekulargewichte Mₙ von 600 bis 3000 g/mol, besonders bevorzugt 750 bis 1500 g/mol auf.

Die nach dem erfindungsgemäßen Verfahren erhältlichen ungesättigten Allophanate weisen bevorzugt Gehalte an freien Di- bzw. Triisocyanatmonomeren von unter 0,5 Gew.-%, besonders bevorzugt unter 0,1 Gew.-% auf

Die erfindungsgemäßen strahlenhärtenden Allophanate können zur Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen verwendet werden. Im Falle der Verklebung oder Abdichtung ist allerdings Voraussetzung, dass bei UV-Stahlenhärtung mindestens eines der beiden zu verklebenden oder miteinander abzudichtenden Substrate für UV-Strahlung durchlässig, also i. d. R. transparent sein muss. Bei der Elektronenstrahlung ist auf eine hinreichende Durchlässigkeit für Elektronen zu achten. Bevorzugt ist die Verwendung in Lacken und Beschichtungen.

Ein weiterer Gegenstand der Erfmdung sind Beschichtungsmittel enthaltend

Die Polyisocyanate der Komponente b) sind dem Fachmann an sich bekannt. Bevorzugt werden hier gegebenenfalls mit Isocyanurat-, Allophanat-, Biuret-, Uretdion- und/oder Iminooxadiazintriongruppen modifizierte Verbindungen auf Hexamethylendiisocyanat-, Isophorondiisocyanat-, 4,4'-Diisocyanatodicyclohexylmethan- und/oder Trimethylhexamethylendiisocyanat-Basis verwendet.

Die NCO-Gruppen können dabei auch blockiert sein, wobei als Blockierungsmittel die bereits bei Beschreibung der Komponente A) genannten Verbindungen zum Einsatz kommen.

Zu den Verbindungen der Komponente c) gehören Verbindungen wie insbesondere Urethanacrylate bevorzugt auf Hexamethylendiisocyanat-, Isophorondiisocyanat-, 4,4'-Diisocyanatodicyclohexylmethan- und/oder Trimethylhexamethylendiisocyanat-Basis, welche gegebenenfalls mit Isocyanurat-, Allophanat-, Biuret-, Uretdion- und/oder Iminooxadiazintriongruppen modifiziert sein können, welche keine gegenüber Isocyanatgruppen reaktive, aktiven Wasserstoff enthaltene Funktionen aufweisen.

NCO-haltige Urethanacrylate sind kommerziell bei der Bayer AG, Leverkusen, DE als Roskydal^{®} UA VP LS 2337, Roskydal^{®} UA VP LS 2396 oder Roskydal^{®} UA XP 2510 erhältlich.

Weiterhin können die bereits beschriebenen und in der Technik der strahlenhärtenden Beschichtungen bekannten Reaktivverdünner als Bestandteil von c) verwendet werden, sofern sie keine mit NCO-Gruppen reaktiven Gruppen enthalten.

Verbindungen der Komponente d) können gesättigt oder ungesättigt sein. Mit NCO-Gruppen reagierende chemische Funktionalitäten sind aktivierte Wasserstoffatome enthaltende Funktionalitäten wie Hydroxyl, Amin oder Thiol.

Bevorzugt sind gesättigte Polyhydroxyverbindungen, z.B. die an sich aus der Technologie des Beschichtens, des Klebens, der Druckfarben oder der Dichtungsmassen bekannten Polyetherpolyole, Polyesterpolyole, Polycarbonatpolyole, Poly(meth)acrylatpolyole, Polyurethanpolyole, die keine unter Einwirkung aktinischer Strahlung mit ethylenisch ungesättigten Verbindungen unter Polymerisation reagierende Gruppen aufweisen.

Ungesättigte hydroxyfunktionelle Verbindungen sind z.B. die in der Technik der strahlenhärtenden Beschichtungen bekannten Epoxyacrylate, Polyesteracrylate, Polyetheracrylate, Urethanacrylate sowie acrylierte Polyacrylate, die eine OH-Zahl von 30 bis 300 mg KOH/g aufweisen.

Weiterhin können die bereits beschriebenen und in der Technik der strahlenhärtenden Beschichtungen bekannten Reaktivverdünner als Bestandteil von d) verwendet werden, sofern sie mit NCO-Gruppen reaktive Gruppen enthalten.

Als Initiatoren der Komponente e) für eine radikalische Polymerisation können durch Strahlung und/oder thermisch aktivierbare Initiatoren zum Einsatz kommen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. Geeignete (Typ I)-Systeme sind aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, A-cylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxy-acetophenone und α-Hydroxyalkylphenone.

Die Initiatoren, die in Mengen zwischen 0,1 und 10 Gew.-%, vorzugsweise 0,1 bis 5 Gew.-%, bezogen auf das Gewicht des Lackbindemittels, eingesetzt werden, können als einzelne Substanz oder, wegen häufiger vorteilhafter synergistischer Effekte, auch in Kombination miteinander verwendet werden.

Werden Elektronenstrahlen statt UV-Strahlung verwendet, so benötigt man keinen Photoinitiator. Elektronenstrahlung wird wie dem Fachmann bekannt ist, mittels thermischer Emission erzeugt und über eine Potentialdifferenz beschleunigt. Die energiereichen Elektronen schlagen dann durch eine Titanfolie und werden auf die zu härtenden Bindemittel gelenkt. Die allgemeinen Prinzipien der Elektronenstrahlhärtung sind in "Chemistry & Technology of UV & EB Formulations for Coatings, Inks & Paints", Vol. 1, P K T Oldring (Ed.), SITA Technology, London, England, S. 101-157, 1991 im Detail beschrieben.

Im Falle einer thermischen Härtung der aktivierten Doppelbindungen, kann diese auch unter Zusatz von thermisch zerfallenden Radikalbildnern erfolgen. Geeignet sind, wie dem Fachmann bekannt ist, z.B. Peroxyverbindungen wie Dialkoxydicarbonate wie z.B. Bis(4-tert-butylcyclohexyl)peroxydicarbonat, Dialkylperoxide wie z.B. Dilaurylperoxid, Perester aromatischer oder aliphatischer Säuren wie z.B. tert.-Butylperbenzoat oder tert.-Amylperoxy 2-ethylhexanoat, anorganische Peroxide wie z. B. Ammoniumperoxodisulfat, Kaliumperoxodisulfat, organische Peroxide wie z.B. 2,2-Bis(tert.-butylperoxy)butan, Dicumylperoxid, tert.-Butylhydroperoxid oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl] propionamide. Möglich sind auch hochsubstituierte 1,2-Diphenylethane (Benzpinakole), wie z. B. 3,4-Dimethyl-3,4-diphenylhexan, 1,1,2,2-Tetraphenyl-ethandiol-1,2 oder auch deren silylierten Derivate.

Es ist auch möglich eine Kombination von durch UV-Licht und thermisch aktivierbaren Initiatoren zu verwenden.

Zu den Hilfs- und Zusatzstoffen der Komponente e) gehören Lösemittel der vorstehend genannten Art.

Des Weiteren können in e) zur Erhöhung der Wetterstabilität der gehärteten Lackschicht auch UV-Absorber und/oder HALS-Stabilisatoren enthalten sein. Bevorzugt ist die Kombination. Erstere sollten einen Absorptionsbereich von maximal 390 nm haben wie Triphenyltriazintypen (z.B. Tinuvin^{®} 400 (Ciba Spezialitätenchemie GmbH, Lampertheim, DE)), Benztriazole wie Tinuvin® 622 (Ciba Spezialitätenchemie GmbH, Lampertheim, DE) oder Oxalsäuredianilide (z. B. Sanduvor^{®} 3206 (Clariant, Muttenz, CH) )) und werden in 0,5 - 3,5 Gew.-% bezogen auf Festharz zugegeben. Geeignete HALS-Stabilisatoren sind kommerziell erhältlich (Tinuvin^{®} 292 oder Tinuvin^{®} 123 (Ciba Spezialitätenchemie GmbH, Lampertheim, DE) oder Sanduvor^{®} 3258 (Clariant, Muttenz, CH). Bevorzugte Mengen sind 0,5-2,5 Gew.-% bezogen auf Festharz.

Ebenfalls können in e) Pigmente, Farbstoffe, Füllstoffe, Verlaufs- und Entlüftungsadditive enthalten sein.

Darüber hinaus können, sofern erforderlich die aus der Polyurethanchemie bekannten Katalysatoren zur Beschleunigung der NCO/OH-Reaktion in e) enthalten sein. Dies sind z.B. Zinn- oder Zinksalze oder Zinnorganoverbindungen, Zinn- und/oder Zinkseifen wie z.B. Zinnoctoat, Dibutylzinndilaurat, Dibutylzinnoxid oder tertiäre Amine wie z. B. Diazabicyclo[2,2,2]octan (DABCO).

Das Auftragen der erfmdungsgemäßen Beschichtungsmittel auf das zu beschichtende Material erfolgt mit den in der Beschichtungstechnologie üblichen und bekannten Methoden wie Spritzen, Rakeln, Walzen, Gießen, Tauchen, Schleudern, Streichen oder Sprühen oder durch Druck-Techniken wie Sieb-, Tief-, Flexo- oder Offsetdruck sowie durch Transfer-Methoden.

Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate wie Fahrzeuge, Flugzeuge oder Schiffe sowie deren Teile, insbesondere Karosserien oder Anbauteile lackiert werden. Es ist auch möglich die Beschichtungsmittel nur temporär auf ein Substrat aufzubringen, dann teilweise oder vollständig zu härten und gegebenenfalls wieder abzulösen, um z.B. Folien herzustellen.

Zur Aushärtung können durch Ablüften z.B. enthaltene Lösemittel ganz oder teilweise entfernt werden.

Anschließend oder gleichzeitig können der oder die ggf. notwendigen thermischen und der und die photochemischen Aushärtungsprozesse nacheinander oder gleichzeitig durchgeführt werden.

Falls notwendig kann die thermische Härtung bei Raumtemperatur aber auch bei erhöhter Temperatur, vorzugsweise bei 40 - 160°C, bevorzugte bei 60 - 130°C, besonders bevorzugte bei 80 - 110°C erfolgen.

Bei Verwendung von Photoinitiatoren in d) erfolgt die Strahlungshärtung bevorzugt durch Einwirkung energiereicher Strahlung, also UV-Strahlung oder Tageslicht, z.B. Licht der Wellenlänge 200 bis 700 nm oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können bauartbedingt oder durch Einsatz spezieller Filter und/oder Reflektoren so ausgestattet sein, das der Austritt eines Teils des UV-Spektrums verhindert wird. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z. B. unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Bei Verwendung von thermisch aktivierbaren Initiatoren in d) durch Erhöhung der Temperatur. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen.

Die applizierten Schichtdicken (vor der Härtung) liegen typischerweise zwischen 0,5 und 5000 µm, bevorzugt zwischen 5 und 1000 µm, besonders bevorzugt zwischen 15 und 200 µm. Bei Verwendung von Lösungsmitteln wird dieses nach der Applikation und vor der Härtung durch die gängigen Methoden entfernt.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die Viskositätsmessungen wurden mit einem Platte-Platte Rotationsviskosimeter, Roto-Visko 1 der Firma Haake, DE, mit einer Schergeschwindigkeit von 47,94/s nach ISO/DIS 3219:1990 durchgeführt.

Die zur Zeit der Versuchsdurchführung herrschende Umgebungstemperatur von 23°C wird als RT bezeichnet.

### Beispiel 1: erfindungsgemäßes allophanathaltiges Bindemittel (NCO/OH=1,33:1, 20 mol% 2-Hydroxyethylacrylat, 80 mol-% 2-Hydroxypropylacrylat)

In einem 2000ml-Sulfierbecher mit Rückflußkühler, beheizbarem Ölbad, mechanischem Rührer, Luftdurchleitung (21/h), Innenthermometer und Tropftrichter wurden 470,4g Hexamethylendiisocyanat (Desmodur^{®} H, Bayer MaterialScience, Leverkusen) und 100mg Phenothiazin vorgelegt und auf 70°C erwärmt. Es wurden 50mg Dibutylzinndilaurat (Desmorapid Z, Bayer MaterialScience, Leverkusen) zugegeben und zunächst 437,14g Hydroxypropylacrylat und dann 97,52g Hydroxyethylacrylat so zugetropft, dass die Temperatur von 80°C nicht überschritten wurde. Es wurde nachgerührt, bis der theoretische NCO-Wert von 5,83% erreicht war. Dann wurden 3,98g *N,N-*Dimethylbenzylamin zugegeben und etwa 5 Minuten gerührt, bis die Mischung homogenisiert war. Anschließend wurden 3,02g Zinkoctoat (Borchi Kat 22 der Firma Borchers GmbH, Langenfeld, DE) beigemengt und solange bei 80°C gerührt, bis der NCO-Gehalt unter 0,2% gesunken war (etwa 20 Stunden). Es wurde ein farbloses Harz mit einem Rest-NCO-Gehalt von 0,11% und einer Viskosität von 34.200mPas(23°C) erhalten.

### Beispiel 2: erfindungsgemäßes allophanathaltiges Bindemittel (NCO/OH=1,33:1, 40 mol-% 2-Hydroxyethylacrylat, 60 mol% 2-Hydroxypropylacrylat)

In einem 2000ml-Sulfierbecher mit Rückflußkühler, beheizbarem Ölbad, mechanischem Rührer, Luftdurchleitung (21/h), Innenthermometer und Tropftrichter wurden 470,4g Hexamethylendiisocyanat (Desmodur^{®} H, Bayer MaterialScience, Leverkusen) und 100mg Phenothiazin vorgelegt und auf 70°C erwärmt. Es wurden 50mg Dibutylzinndilaurat (Desmorapid Z, Bayer MaterialScience, Leverkusen) zugegeben und zunächst 327,85g Hydroxypropylacrylat und dann 195,05g Hydroxyethylacrylat so zugetropft, dass die Temperatur von 80°C nicht überschritten wurde. Es wurde nachgerührt, bis der theoretische NCO-Wert von 5,89% erreicht war. Dann wurden 3,98g *N,N-*Dimethylbenzylamin zugegeben und etwa 5 Minuten gerührt, bis die Mischung homogenisiert war. Anschließend wurden 3,0g Zinkoctoat (Borchi Kat 22 der Firma Borchers GmbH, Langenfeld, DE) beigemengt und solange bei 80°C gerührt, bis der NCO-Gehalt unter 0,2% gesunken war (etwa 20 Stunden). Es wurde ein farbloses Harz mit einem Rest-NCO-Gehalt von 0,03% und einer Viskosität von 30.100mPas(23°C) erhalten.

### Vergleichsbeispiel zu Beispiel 1 und 2: nicht erfindungsgemäßes allophanathaltiges Bindemittel (NCO/OH=1,33:1, 100 mol-% 2-Hydroxypropylacrylat)

In einem 500ml-Vierhals-Glaskolben mit Rückflußkühler, beheizbarem Ölbad, mechanischem Rührer, Luftdurchleitung (0,51/h), Innenthermometer und Tropftrichter wurden 230,45g Hexamethylendiisocyanat (Desmodur^{®} H, Bayer MaterialScience, Leverkusen) und 50mg Phenothiazin vorgelegt und auf 70°C erwärmt. Es wurden 25mg Dibutylzinndilaurat (Desmorapid Z, Bayer MaterialScience, Leverkusen) zugegeben und 267,18g Hydroxypropylacrylat so zugetropft, dass die Temperatur von 80°C nicht überschritten wurde. Es wurde nachgerührt, bis der theoretische NCO-Wert von 5,78% erreicht war. Dann wurden 2,0g *N,N*-Dimethylbenzylamin zugegeben und etwa 5 Minuten gerührt, bis die Mischung homogenisiert war. Anschließend wurden 1,5g Zinkoctoat (Borchi Kat 22 der Firma Borchers GmbH, Langenfeld, DE) beigemengt und solange bei 80°C gerührt, bis der NCO-Gehalt unter 0,2% gesunken war (etwa 16 Stunden). Es wurde ein farbloses Harz mit einem Rest-NCO-Gehalt von 0,16% und einer Viskosität von 39.500mPas(23°C) erhalten.

### Beispiel 3: nicht erfindungsgemäßes allophanathaltiges Bindemittel (NCO/OH= 1,43:1, 40 mol-% 2-Hydroxyethylacrylat, 60 mol-% 2-Hydroxypropylacrylat)

In einem 2000ml-Sulfierbecher mit Rückflußkühler, beheizbarem Ölbad, mechanischem Rührer, Luftdurchleitung (21/h), Innenthermometer und Tropftrichter wurden 470,4g Hexamethylendiisocyanat und 1.00mg Phenothiazin vorgelegt und auf 70°C erwärmt. Es wurden 50mg Dibutylzinndilaurat zugegeben und zunächst 306,0g Hydroxypropylacrylat und dann 182,04g Hydroxyethylacrylat so zugetropft, dass die Temperatur von 80°C nicht ülserschritten wurde. Es wurde nachgerührt, bis der theoretische NCO-Wert von 7,33% erreicht war. Dann wurden 3,98g *N,N*-Dimethylbenzylamin zugegeben und etwa 5 Minuten gerührt, bis die Mischung homogenisiert war. Anschließend wurden 2,88g Zinkoctoat (Borchi Kat 22 der Firma Borchers GmbH, Langenfeld, DE) beigemengt und solange bei 80°C gerührt, bis der NCO-Gehalt unter 0,2% gesunken war (etwa 20 Stunden). Es wurde ein farbloses Harz mit einem Rest-NCO-Gehalt von 0,09% und einer Viskosität von 57.500mPas(23°C) erhalten.

### Vergleichsbeispiel zu Beispiel 3: nicht erfindungsgemäßes allophanathaltiges Bindemittel (NCO/OH= 1,43: 1, 100 mol% 2-Hydroxypropylacrylat)

In einem 500ml-Vierhals-Glaskolben mit Rückflußkühler, beheizbarem Ölbad, mechanischem Rührer, Luftdurchleitung (0,51/h), Innenthermometer und Tropftrichter wurden 238,48g Hexamethylendiisocyanat und 50mg Phenothiazin vorgelegt und auf 70°C erwärmt. Es wurden 25mg Dibutylzinndilaurat zugegeben und 258,06g Hydroxypropylacrylat so zugetropft, dass die Temperatur von 80°C nicht überschritten wurde. Es wurde nachgerührt, bis der theoretische NCO-Wert von 7,19% erreicht war. Dann wurden 1,88g *N,N-*Dimethylbenzylamin zugegeben und etwa 5 Minuten gerührt, bis die Mischung homogenisiert war. Anschließend wurden 1,5g Zinkoctoat (Borchi Kat 22 der Firma Borchers GmbH, Langenfeld, DE) beigemengt und solange bei 80°C geführt, bis der NCO-Gehalt unter 0,2% gesunken war (etwa 20 Stunden). Es wurde ein farbloses Harz mit einem Rest-NCO-Gehalt von 0,19% und einer Viskosität von 79.000mPas(23°C) erhalten.

### Beispiel 5: Lackformulierung und Lack

Ein Teil des Produkts aus Beispiel 1 wurde mit 3,0 % des Photoinitiators Darocur^{®} 1173 (Photoinitiator, Handelsprodukt der Ciba Spezialitätenchemie GmbH, Lampertheim, DE) intensiv gemischt. Mittels eines Knochen-Rakels mit einem Spalt von 90 µm wurde die Mischung als dünner Film auf eine Glasplatte aufgezogen. Nach UV-Bestrahlung (Quecksilbermitteldruckstrahler, IST Metz GmbH, Nürtingen, DE, 750 mJ/cm²) wurde ein transparente, harte Beschichtung erhalten, die sich durch Stahlwolle (Typ 0/0/0) mit einer auf den Film gerichteten Kraft von 500 g in zehn Doppelhüben kaum verkratzen ließ.

### Zusammenfassung:

| Bsp./VglBsp. | Anteil HEA erfg./n. erfg. | NCO/OH | Viskosität erfindungsgemäß | Viskosität nicht erfindungsgemäß |
|---|---|---|---|---|
| 1/1+2 | 20%/0% | 1,33:1,0 | 34.200mPas | 39.500mPas |
| 2/1+2 | 40%/0% | 1,33:1,0 | 30.100mPas | 39.500mPas |
| 3/3 | 33%/0% | 1,43:1,0 | 57.500mPas | 79.000mPas |

Bei allen Beispielen ist die Viskosität der erfindungsgemäßen, anteilig mit 2-Hydroxyethylacrylat und 2-Hydroxypropylacrylat hergestellten Bindemittel deutlich geringer als die Viskosität der Vergleichsbeispiele, die ausschließlich mit 2-Hydroxypropylacrylat hergestellt wurden.

## Patentansprüche

1. Verfahren zur Herstellung von strahlenhärtenden Allophanaten mit Restmonomergehalten von weniger als 0,5 Gew.-% und einem NCO-Gehalt von weniger als 1 Gew.-%, bei dem aus
A) isocyanatgruppenhaltigen Verbindungen,
B) einer Mischung, die mindestens 90 mol-% Hydroxyethylacrylat und Hydroxypropylacrylat enthält, bei der 20-40 mol-% Hydroxyethylacrylat enthalten ist,
C) gegebenenfalls weiteren, nicht strahlenhärtenden Verbindungen mit NCOreaktiven Gruppen,
D) gegebenenfalls in Anwesenheit eines Katalysators
NCO-gruppenhaltige Urethane mit strahlenhärtenden Gruppen gebildet werden, die anschließend ohne weitere Zugabe an isocyanatgruppenhaltigen Verbindungen in Anwesenheit
E) eines Allophanatisierungskatalysators und
F) gegebenenfalls eines tertiären Amins
umgesetzt werden,
wobei das Verhältnis von NCO-Gruppen der Verbindungen aus A) zu den OH-Gruppen von den Verbindungen aus B) und ggf. C) 1,35 : 1,0 bis 1,3 : 1,0 beträgt.

2. Verfahren zur Herstellung von strahlenhärtenden Allophanaten gemäß Anspruch 1, **dadurch gekennzeichnet, dass** in Komponente B) eine Mischung eingesetzt wird, die zu 100 mol-% aus einer Mischung aus Hydroxyethylacrylat und Hydroxypropylacrylat besteht.

3. Verfahren zur Herstellung von strahlenhärtenden Allophanaten gemäß einem der Ansprüche 1 oder 2, **dadurch gekennzeichnet, dass** in Komponente A) Hexamethylendiisocyanat (HDI), Isophorondiisocyanat (IPDI) und/oder 4,4'-Diisocyanatodicyclohexylmethan eingesetzt werden.

4. Verfahren zur Herstellung von strahlenhärtenden Allophanaten gemäß einem der Ansprüche 1 bis 3, **dadurch gekennzeichnet, dass** die Allophanatisierung solange geführt wird, bis das Endprodukt einen NCO-Gehalt von unter 0,2 Gew.-% aufweist.

5. Strahlenhärtende Allophanate erhältlich nach einem Verfahren gemäß einem der Ansprüche 1 bis 4.

6. Verwendung der Strahlenhärtenden Allophanate gemäß Anspruch 5 bei der Herstellung von Beschichtungen und Lacken sowie Klebstoffen, Druckfarben, Gießharzen, Dentalmassen, Schlichten, Photoresisten, Stereolithographiesystemen, Harzen für Verbundwerkstoffe und Dichtungsmassen.

7. Beschichtungsmittel enthaltend
a) ein oder mehrere der strahlenhärtenden Allophanate gemäß Anspruch 5,
b) gegebenenfalls ein oder mehrere Polyisocyanate mit freien oder blockierten Isocyanatgruppen, die frei sind von unter Einwirkung aktinischer Strahlung mit ethylenisch ungesättigten Verbindungen unter Polymerisation reagierenden Gruppen,
c) gegebenenfalls weitere von denen aus a) verschiedene Verbindungen, die unter Einwirkung aktinischer Strahlung mit ethylenisch ungesättigten Verbindungen unter Polymerisation reagierende Gruppen und gegebenenfalls freie oder blockierte NCO-Gruppen aufweisen,
d) gegebenenfalls ein oder mehrere mit Isocyanaten reagierende, aktiven Wasserstoff enthaltende Verbindungen
e) Initiatoren,
f) gegebenenfalls Lösemittel und
g) gegebenenfalls Hilfs- und Zusatzstoffe.

8. Substrate beschichtet mit Beschichtungen erhältlich unter Verwendung von strahlenhärtenden Allophanate gemäß Anspruch 5.

## Claims

1. Process for preparing radiation-curing allophanates having residual monomer contents of less than 0.5% by weight and an NCO content of less than 1% by weight, wherein
A) compounds containing isocyanate groups,
B) a mixture containing at least 90 mol% of hydroxyethyl acrylate and hydroxypropyl acrylate, in which 20-40 mol% of hydroxyethyl acrylate is included,
C) optionally further, non-radiation-curing compounds containing NCO-reactive groups
D) optionally in the presence of a catalyst
are used to form NCO-group-containing urethanes having radiation-curing groups, which are subsequently reacted, without further addition of compounds containing isocyanate groups, in the presence
E) of an allophanatization catalyst and
F) optionally of a tertiary amine,
the ratio of NCO groups of the compounds from A) to the OH groups of the compounds from B) and, where used, C) being 1.35 : 1.0 to 1.3 : 1.0.

2. Process for preparing radiation-curing allophanates according to Claim 1, **characterized in that** in component B) a mixture is used which is composed to an extent of 100 mol% of a mixture of hydroxyethyl acrylate and hydroxypropyl acrylate.

3. Process for preparing radiation-curing allophanates according to either of Claims 1 and 2, **characterized in that** in component A) hexamethylene diisocyanate (HDI), isophorone diisocyanate (IPDI) and/or 4,4'-diisocyanatodicyclohexylmethane are used.

4. Process for preparing radiation-curing allophanates according to any one of Claims 1 to 3, **characterized in that** the allophanatization is carried out until the end product has an NCO content of below 0.2% by weight.

5. Radiation-curing allophanates obtainable by a process according to any one of Claims 1 to 4.

6. Use of the radiation-curing allophanates according to Claim 5 in the preparation of coatings, coating materials, adhesives, printing inks, casting resins, dental compounds, sizes, photoresists, stereolithography systems, resins for composite materials and sealants.

7. Coating compositions comprising
a) one or more of the radiation-curing allophanates according to Claim 5,
b) optionally one or more polyisocyanates containing free or blocked isocyanate groups, which are free from groups which react, with polymerization, with ethylenically unsaturated compounds on exposure to actinic radiation,
c) optionally other compounds, different from those of a), which contain groups which react, with polymerization, with ethylenically unsaturated compounds on exposure to actinic radiation, and optionally contain free or blocked NCO groups,
d) optionally one or more isocyanate-reactive compounds containing active hydrogen,
e) initiators,
f) optionally solvents and
g) optionally auxiliaries and additives.

8. Substrates coated with coatings obtainable using radiation-curing allophanates according to Claim 5.

## Revendications

1. Procédé de fabrication d'allophanates durcissant par rayonnements ayant des teneurs résiduelles en monomères inférieures à 0,5 % en poids et une teneur en NCO inférieure à 1 % en poids, selon lequel à partir
A) de composés contenant des groupes isocyanate,
B) d'un mélange qui contient au moins 90 % en moles d'acrylate d'hydroxyéthyle et d'acrylate d'hydroxypropyle, l'acrylate d'hydroxyéthyle étant contenu à hauteur de 20 à 40 % en moles,
C) éventuellement de composés non durcissant par rayonnements supplémentaires, contenant des groupes réactifs avec NCO,
D) éventuellement en présence d'un catalyseur,
des uréthanes contenant des groupes NCO et des groupes durcissant par rayonnements sont formés, qui sont ensuite mis en réaction sans ajout supplémentaire de composés contenant des groupes isocyanate en présence
E) d'un catalyseur d'allophanatisation, et
F) éventuellement d'une amine tertiaire,
le rapport entre les groupes NCO des composés de A) et les groupes OH des composés de B) et éventuellement C) étant de 1,35:1,0 à 1,3:1,0.

2. Procédé de fabrication d'allophanates durcissant par rayonnements selon la revendication 1, **caractérisé en ce qu'**un mélange est utilisé dans le composant B), qui est constitué à 100 % en moles d'un mélange d'acrylate d'hydroxyéthyle et d'acrylate d'hydroxypropyle.

3. Procédé de fabrication d'allophanates durcissant par rayonnements selon l'une quelconque des revendications 1 ou 2, **caractérisé en ce que** du diisocyanate d'hexaméthylène (HDI), du diisocyanate d'isophorone (IPDI) et/ou du 4,4'-diisocyanatodicyclohexylméthane sont utilisés dans le composant A).

4. Procédé de fabrication d'allophanates durcissant par rayonnements selon l'une quelconque des revendications 1 à 3, **caractérisé en ce que** l'allophanatisation est réalisée jusqu'à ce que le produit final présente une teneur en NCO inférieure à 0,2 % en poids.

5. Allophanates durcissant par rayonnements pouvant être obtenus par un procédé selon l'une quelconque des revendications 1 à 4.

6. Utilisation des allophanates durcissant par rayonnements selon la revendication 5 pour la fabrication de revêtements et de laques, ainsi que d'adhésifs, d'encres d'impression, de résine de coulée, de compositions dentaires, d'agents d'encollage, de résines photosensibles, de systèmes de stéréolithographie, de résines pour matériaux composites et de matériaux d'étanchéité.

7. Agent de revêtement contenant
a) un ou plusieurs des allophanates durcissant par rayonnements selon la revendication 5,
b) éventuellement un ou plusieurs polyisocyanates contenant des groupes isocyanate libres ou bloqués, qui sont exempts de groupes réagissant par polymérisation sous l'effet d'un rayonnement actinique avec des composés éthyléniquement insaturés,
c) éventuellement des composés différents de ceux de a) supplémentaires, qui comprennent des groupes réagissant par polymérisation sous l'effet d'un rayonnement actinique avec des composés éthyléniquement insaturés et éventuellement des groupes NCO libres ou bloqués,
d) éventuellement un ou plusieurs composés contenant de l'hydrogène actif, réagissant avec les isocyanates,
e) des initiateurs,
f) éventuellement des solvants, et
g) éventuellement des adjuvants et additifs.

8. Substrats revêtus avec des revêtements pouvant être obtenus en utilisant des allophanates durcissant par rayonnements selon la revendication 5.
